# EUROPÄISCHE PATENTSCHRIFT

(11) **EP 1 733 837 B1**
(45) Veröffentlichungstag und Bekanntmachung des Hinweises auf die Patenterteilung: **30.04.2008**
(21) Anmeldenummer: 06010573.1
(22) Anmeldetag: 23.05.2006
(51) Int. Cl.: B23K 26/40, B23K 26/14

(54) **Vorrichtung zum mehrfachen Trennen eines flachen Werkstückes aus einem spröden Material mittels Laser**
Apparatus for separating a flat workpiece made of a brittle material by means of a laser
Dispositif pour séparer une pièce plane en matériau fragile par laser

(30) Priorität: 13.06.2005 DE 102005027800
(43) Veröffentlichungstag der Anmeldung: 20.12.2006
(73) Patentinhaber: JENOPTIK Automatisierungstechnik GmbH, 07745 Jena (DE)
(72) Erfinder: Acker, Stefan, 07646 Waldeck (DE); Ullmann, Ronny, 07768 Altenberga (DE); Weisser, Jürgen, 07743 Jena (DE)
(74) Vertreter: Schaller, Renate

(56) Entgegenhaltungen:
- WO-A-00/02700
- US-A1- 2003 209 528
- PATENT ABSTRACTS OF JAPAN Bd. 2000, Nr. 11, 3. Januar 2001 (2001-01-03) & JP 2000 233936 A (MITSUBOSHI DIAMOND KOGYO KK), 29. August 2000 (2000-08-29)

## Beschreibung

Die Erfindung betrifft eine Vorrichtung zum Trennen von spröden Materialen mittels Laser durch Provokation von thermomechanischen Spannungen, wie sie gattungsgemäß aus der WO96/20062oder aus der JP-A-2000 233936 bekannt ist.

Laserverfahren, bei dem kein Material abgetragen wird, sondern bei dem das Material durch Provokation thermischer Spannungen gespalten wird, beruhen auf dem Prinzip der begrenzten lokalen Aufheizung unterhalb der Erweichungstemperatur des Materials, wodurch Druckspannungen im Material entstehen und dem anschließenden schockartigen Abkühlen mittels eines gerichteten Kühlmittelstrahles, wodurch Zugspannungen generiert werden. Die entstehenden Kräfte im Material führen zu einem Spaltbruch.

In der WO 96/20062 ist neben einem solchen Laserverfahren auch eine Vorrichtung zur Durchführung eines solchen Verfahrens offenbart.
Die Vorrichtung umfasst einen Bestrahlungsteil mit einem Laser und einem entlang dessen optischer Achse angeordneten Fokussiersystem, einen gegenüber dem Bestrahlungsteil versetzbaren Mechanismus, durch den ein Kältemittel in die Schnittzone gebracht wird, Mittel mit denen das zu schneidende Material fixiert wird, Mittel zum relativen Versetzen des Lasers und des Kältemittels zum Werkstück sowie eine Steuereinrichtung.

Eine Vielzahl weiterer Publikationen betreffen Verfahren, mit denen die Strahlungsdichteverteilung im Strahlungsfleck oder die Strahlfleckform optimiert werden, um die Qualität und Geschwindigkeit des Trennprozesses zu verbessern.
Entsprechend unterscheiden sich die zur Verfahrensdurchführung verwendeten Vorrichtungen im Wesentlichen nur durch unterschiedliche Strahlformungs- bzw. Strahlführungselemente.
Grundsätzlich gemeinsam haben solche Vorrichtungen folgende Merkmale:
- eine Laserstrahlungsquelle, grundsätzlich mit steuerbarer Strahlungsleistung und Strahlungsdauer. In Abhängigkeit vom Laser kann das emittierende Strahlungsbündel neben einer unterschiedlichen Wellenlänge und Strahlungsleistung insbesondere unterschiedliche Strahlungsquerschnittsformen und unterschiedliche Strahlungsdichteverteilungen aufweisen.
- einen Laserkopf, in dem optische Mittel vorhanden sind, um das Laserstrahlungsbündel zur Werkstückoberfläche hin zu fokussieren. Diese optischen Mittel können im Einzelfall zusätzlich einer Strahlformung und Strahlführung bzw. der Änderung einer Strahldichteverteilung dienen.
- Mittel zur relativen Bewegung des Laserkopfes und Werkstücks entlang einer Trennlinie.
- eine Kühlmitteleinrichtung mit einer Kühlmitteldüse, die in Bewegungsrichtung hinter der Laserdüse in einem veränderbaren oder festen Abstand angebracht ist.
- eine Steuereinrichtung, über die unter anderem der Laserkopf und die mit dieser verbundenen Kühlmitteldüse in Richtung der Trennlinie positioniert wird.

Bei der Konzeption solcher Vorrichtungen steht im Vordergrund, dass diese Vorrichtungen im Dauerbetrieb und unter Industriebedingungen präzise und bei hoher Prozessgeschwindigkeit arbeiten müssen.
Um bei einer gegebenen Prozessgeschwindigkeit, d.h. einer gegebenen Zeit zur Durchführung eines Trennschnittes, die Wirtschaftlichkeit des Verfahrens zu erhöhen müssen die technologischen Zeiten so kurz als möglich gehalten werden. Technologische Zeiten sind Stillstandszeiten zur Wartung, Einrichtung und Positionierung von Werkzeug und Werkstück in eine Startpositon.
Wird an einem Werkstück nur ein Trennschnitt ausgeführt, kann die technologische Zeit die notwenig ist, um das getrennte Werkstück gegen ein neues Werkstück auszutauschen genutzt werden, um auch das Werkzeug in die Startposition zu bringen.
Die technologischen Zeiten werden insbesondere dann hoch, wenn eine Vielzahl von Startpositionen eingerichtet werden müssen, um ein Werkstück in mehrere Einzelteile zu trennen wie z.B. beim Trennen einer Waferscheibe in eine Vielzahl von Chips. Die Waferscheibe wird dabei in x-Richtung in eine Vielzahl von Einzelstreifen gleicher Breite aufgetrennt, die anschließend in y-Richtung in eine Vielzahl von Chips gleicher Länge aufgetrennt werden.
Nach jedem Trennschnitt muss das Werkzeug, d.h. der Laserkopf mit der Kühlmitteldüse und das Werkstück, in eine neue Startposition zueinander gebracht werden.
Dazu kann entweder der Laserkopf fest verbunden mit der Kühlmitteldüse über dem ortsfesten Werkstück an die Startkante des vorherigen Trennschnittes zurückgefahren und um die Streifenbreite (Vorschubbewegung) versetzt werden bzw. die Waferscheibe wird entsprechend unter dem ortsfesten Laserkopf positioniert.
Oder aber der Trennschnitt wird seitens der Endkante des vorherigen Schnittes begonnen, was dann lediglich den relativen Versatz um die Streifenbreite erfordert, jedoch eine Umpositionierung der Kühldüse zum Laserkopf notwendig macht, um die Kühldüse jeweils im Richtungssinn des Schnittes hinter dem Laserkopf anzuordnen.
Bei der Ausführung der Trennschnitte jeweils von der gleichen Startkante aus, ergibt sich eine hohe technologische Zeit im Wesentlichen aus der Zeit zur Positionierung des Laserkopfes jeweils zu Beginn eines Trennschnittes.
Bei der Ausführung der Trennschnitte, von abwechselnden Seiten her ergibt sich eine hohe technologische Zeit im Wesentlichen aus der Zeit um die Kühlmitteldüse zum Laserkopf umzupositionieren, so dass sie jeweils hinter dem Laserkopf angeordnet ist.

Es ist die Aufgabe der Erfindung eine Vorrichtung zu schaffen, die insbesondere geeignet ist mit möglichst geringem technologischem Zeitaufwand auf einem Werkstück Trennschnitte gleicher Richtung mit wechselndem Richtungssinn zu erzeugen.

Diese Aufgabe wird für eine Vorrichtung gemäß Anspruch 1 gelöst. Vorteilhafte Ausführungen sind in den Unteransprüchen beschrieben.

Die Erfindung soll nachfolgend an einem Ausführungsbeispiel anhand einer Zeichnung näher erlautet werden.

Hierzu zeigt:

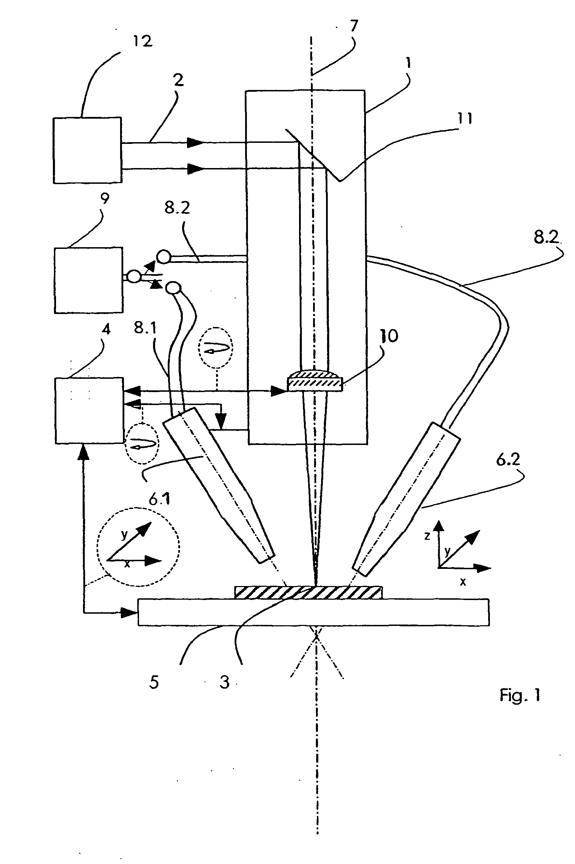

- Fig. 1: eine Prinzipskizze für eine erfindungsgemäße Anordnung.

Eine erfindungsgemäße Vorrichtung umfasst gleich gattungsgemäßen Vorrichtungen im Wesentlichen einen Laserkopf 1, über den eine Laserstrahlung 2 auf ein Werkstück 3 gerichtet wird, Mittel zum Aufbringen eines Kühlmittelstrahles auf das Werkstück, Mittel zum relativen Bewegen des Laserkopfes zum Werkstück sowie eine Steuereinrichtung 4 zum Steuern des Verfahrensablaufes.

Erfindungswesentlich gegenüber aus dem Stand der Technik bekannten gattungsgleichen Vorrichtungen, ist insbesondere die Ausführung und Anordnung der Mittel zum Aufbringen des Kühlmittelstrahles zum Laserkopf 1 sowie die Ausführung der Mittel zur Erzeugung der Relativbewegung zwischen Laserkopf 1 und Werkstück 3.

Um die technologische Zeit zwischen der Beendigung eines Trennschnittes und dem Beginn des nachfolgenden Trennschnittes möglichst gering zu gestalten, werden verschiedene Maßnahmen an der Vorrichtung getroffen.
Die Mittel zur Erzeugung der Relativbewegung werden so gestaltet, dass der translatorische Anteil der Bewegung über die lineare Verschiebung des Werkstückes, z.B. mittels eines verdrehfesten x-y-Tisches 5, in Fig. 1 symbolisch an der Steuerleitung zwischen der Steuereinrichtung 4 und dem x-y-Tisch 5 dargestellt und der eventuelle rotatorische Anteil der Bewegung über eine Verdrehung der Kühlmitteldüsen 6.1 und 6.2 um den ortsfesten Laserkopf 1 realisiert wird. Diese rotatorische Bewegung wird dann notwendig, wenn die Richtung der Trennschnitte geändert wird. Eine einmalige Richtungsänderung durch Verdrehung um 90° erfolgt z.B., wenn nach Auftrennung des Werkstückes in einzelne Streifen durch Trennschnitte in x-Richtung diese Streifen durch Trennschnitte in Y-Richtung in einzelne Chips aufgeteilt werden sollen. Zur Durchführung von Freiformschnitten können die Kühlmitteldüsen während des Erzeugung des Trennschnittes stufenlos verdreht werden. Um eine notwendige rotatorische Bewegung, die notwenig ist, damit das Kühlmittel bei der Prozessdurchführung jeweils hinter dem Laserstrahl 2 auf das Werkstück 3 auftrifft, bei Wechsel nur des Richtungssinnes der Trennbewegung zu ersparen, werden dem Laserkopf 1 zwei Kühlmitteldüsen 6.1 und 6.2 zugeordnet, die mit einem gleichen veränderbaren Abstand und gleicher Neigung zum Laserkopf 1 um 180° zueinander versetzt am Laserkopf 1 angebracht sind.
Dadurch entsteht eine hohe Zeitersparnis, insbesondere wenn eine Vielzahl von Trennschnitten an einem Werkstück 3 in eine Richtung mit wechselndem Richtungssinn zeitlich hocheffizient durchgeführt werden sollen.
Der Laserkopf 1 mit den beiden Kühlmitteldüsen 6.1, 6.2 soll in der nachfolgenden Beschreibung zusammengefasst als Werkzeugkopf bezeichnet werden. Die Achsen der beiden Kühlmitteldüsen 6.1, 6.2 und die Achse 7, die mit der Achse des austretenden Laserstrahles 2 zusammenfällt, liegen in einer Ebene (Arbeitsebene des Werkzeugkopfes). Bei der in Fig. 1 dargestellten Prinzipskizze liegt die Arbeitsebene in der Zeichenebene. Entsprechend ist diese Darstellung für eine Schnittrichtung entlang der x-Achse zutreffend. Je nachdem, ob der Richtungssinn vom Ursprung des skizzierten Koordinatensystems hin oder weg gerichtet ist, ist die Kühlmittelzuführung 8.1 oder 8.2 mit der Kühlmittelquelle 9 verbunden.
Um die Arbeitsebene zum jeweils nachfolgend durchzuführenden Trennschnitt auf dem Werkstück auszurichten, d.h. die Arbeitsebene verläuft durch den Linienverlauf des Trennschnittes, kann der Werkzeugkopf einer erfindungsgemäßen Vorrichtung unterschiedlich konzipiert sein.

In einer ersten vorteilhaften Ausführung sind, wie bereits erwähnt die Kühlmitteldüsen 6.1, 6.2 um den Laserkopf 1 drehbar. Dazu ist am Laserkopf 1 eine um die Achse 7 des Laserkopfes drehbare Halterung angebracht, an der die beiden Kühlmitteldüsen 6.1, 6.2 befestigt sind. Durch Drehung der Halterung, in Fig. 1 symbolisch an der Steuerleitung zwischen der Steuermitteleinrichtung 4 und der Kühlmitteldüse 6.1 dargestellt wird die Arbeitsebene somit um die Achse 7 des Laserkopfes 1 gedreht. Eine Verdrehung der Arbeitsebene ist dann notwendig, wenn ein nachfolgender Trennschnitt in geänderter Trennrichtung verläuft, was z.B. der Fall ist, wenn nach vollständiger Trennung einer Scheibe in Streifen anschließend die Streifen in einzelne Chips getrennt werden sollen, was in der Regel durch Trennschnitte erfolgt, die um 90° versetzt verlaufen. Durch eine stufenlose Verdrehbarkeit kann die Arbeitsebene auch während des Trennens in jede beliebige Trennrichtung ausgerichtet werden.
In der Regel verlaufen die Trennschnitte allerdings nur in zwei Richtungen, z.B. x und y-Richtung, sodass ein Verschwenken der Kühlmitteldüsen 6.1, 6.2 zum Laserkopf 1 zwischen nur zwei Relativpositionen erforderlich ist. Zu diesem Zweck ist es vorteilhaft Rastverbindungen vorzusehen, sodass die Kühlmitteldüsen 6.1, 6.2 schnell und mit hoher Genauigkeit in nur zwei Positionen zum Laserkopf 1 ausgerichtet werden können.
Zum Ausführen von Trennschnitten in die gleiche Richtung, jedoch mit wechselndem Richtungssinn, werden jeweils die Kühlmitteldüsen 6.1, 6.2 im Wechsel aktiviert, sodass die jeweils im Richtungssinn nachlaufende Kühlmitteldüse 6.1 oder 6.2 einen Kühlmittelstrahl auf die Trennlinie richtet. Durch die Wahl identischer Kühlmitteldüsen mit identischen fluidischen Eigenschaften und deren identischer Anordnung zum Laserkopf 1, sind die Verfahrensparameter die Kühlung betreffend identisch. Die vorlaufende Kühlmitteldüse 6.1 oder 6.2 kann auch jeweils zum Aufsprühen eines Markierungsmittels oder zum Freiblasen der Trennlinie von Verunreinigungen dienen.
Wenn der Werkzeugkopf zum Werkstück 3 ausschließlich durch eine Verdrehung der Arbeitsebene um die Achse 7 des Laserkopfes 1 ausgerichtet wird, kann es allerdings passieren, dass andere Verfahrensparameter für die Trennschnitte unterschiedlicher Trennrichtung nicht identisch sind. Das wird immer dann der Fall sein, wenn die Strahlfleckgeometrie oder die Strahlungsdichteverteilung im Strahlungsfleck nichtrotationssymmetrisch zur Achse 7 ist.
D.h. in diesem Falle ist es nicht ausreichend, die Arbeitsebene bestimmt durch die Achsen der Kühlmitteldüsen 6.1, 6.2 und des Laserkopfes 1 zum Trennschnitt auszurichten, sondern es muss auch der Strahlfleck in seiner Relativlage zum Richtungssinn des Trennschnittes ausgerichtet werden. Dies wird ermöglicht, indem auch die optischen Mittel 10 zur Strahlformung der Laserstrahlung 2 um die Achse 7 drehbar ausgeführt sind. In Fig. 1 ist dies symbolisch an der Steuerleitung zwischen der Steuereinrichtung 4 und den optischen Mitteln 10 verdeutlicht.

Im einleitend beschriebenen Stand der Technik wurde erwähnt, dass sich die aus dem Stand der Technik bekannten Verfahren zum Trennen von sprödem Material durch Provokation thermomechanischer Spannungen mittels Laser häufig durch unterschiedliche Strahlfleckgeometrien und unterschiedliche Strahlungsdichteverteilungen im Strahlfleck unterscheiden, womit für unterschiedliche Materialien und Materialdicken eine optimierte Schnittqualität und Prozessgeschwindigkeit erreicht werden soll.
Bestimmend für die Strahlfleckgeometrie und die Strahldichteverteilung ist die Auswahl und Anordnung der im Laserkopf 1 vorgesehenen optischen Mittel 10, die auch zur Fokussierung der Laserstrahlung 2 dienen. Beispielsweise kann die Strahlfleckgeometrie mit einer Zylinderlinse, einem Axicon oder einem diffraktiven Element beeinflusst werden, wobei deren Drehlage zur Trennlinie bestimmend für die Lage des Strahlfleckes zur Trennlinienrichtung ist.
Um also auch für unterschiedliche Trennlinienrichtungen identische Strahlfleckparameter zu erreichen, müssen die optischen Mittel 10 und die Kühlmitteldüsen 6.1, 6.2 um gleiche Winkel um die Achse 7 verdreht werden.
Es ist daher von Vorteil, wenn die optischen Mittel 10 gekoppelt an die Kühlmitteldüsen 6.1, 6.2 im Laserkopf 1 drehbar gelagert sind. Über eine gesteuerte axiale Verschiebung der optischen Mittel 10 kann die Laserstrahlung 2 für Werkstücke 3 unterschiedlicher Dicke und unterschiedlicher Materialparameter optimiert werden.
In einem zweiten, nicht in den Zeichnungen dargestellten Ausführungsbeispiel, sollen nicht die Kühlmitteldüsen 6.1, 6.2 um den Laserkopf 1 und die optischen Mittel 10 im Laserkopf 1 um dessen Achse 7 verdrehbar befestigt sein, sondern der Laserkopf 1 ist um seine Achse 7 um 180° drehbar gelagert, wobei die Kühlmitteldüsen 6.1, 6.2 und die optischen Mittel 10 fest mit dem Laserkopf 1 verbunden sind. Nachteilig ist hier, dass sich zur Laserstrahleinkopplung vorhandene Mittel, in Fig. 1 als Spiegel 11 dargestellt, ebenfalls gegenüber dem Laser 12, welcher die Laserstrahlung 2 emittiert verdrehen, sodass zusätzliche Maßnahmen zur Laserstrahleinkopplung getroffen werden müssen.

Dem Fachmann auf dem Gebiet dieser Erfindung erschließt sich, dass die Erfindung nicht auf die Einzelheiten der vorstehend beispielhaft angeführten Ausführungsformen beschränkt ist, sondern dass die vorliegende Erfindung in anderen speziellen Formen verkörpert sein kann, ohne vom Umfang der Erfindung abzuweichen, die durch die anliegenden Ansprüche festgelegt ist.

### Bezugszeichenliste

- 1: Laserkopf
- 2: Laserstrahlung
- 3: Werkstück
- 4: Steuereinrichtung
- 5: x-y-Tisch
- 6.1, 6.2: Kühlmitteldüsen
- 7: Achse
- 8.1, 8.2: Kühlmittelzuführung
- 9: Kühlmittelquelle
- 10: optische Mittel
- 11: Spiegel
- 12: Laser

## Patentansprüche

1. Vorrichtung zum mehrfachen Trennen eines flachen Werkstückes aus sprödem Material entlang Trennlinien gleicher Richtung durch Provokation von thermomechanischen Spannungen mittels Laser, mit
• einem Laserkopf (1), über den eine Laserstrahlung (2) auf ein Werkstück (3) gerichtet wird,
• Mitteln zum Ausrichten, Positionieren und relativen Bewegen zwischen dem Laserkopf (1) und dem Werkstück (3) entlang einer Trennlinie,
• Mitteln zum Aufbringen eines Kühlmittelstrahles auf das Werkstück (3) entlang der Trennlinie
• sowie einer Steuereinrichtung (4) zum Steuern des Verfahrensablaufes
wobei
die Mittel zum Aufbringen eines Kühlmittelstrahles zwei Kühlmitteldüsen (6.1, 6.2) sind, deren Achsen, welche die Richtung des Kühlmittelstrahles bestimmen, gemeinsam mit der Achse (7) des Laserkopfes (1), welche die Strahlungsrichtung des Laserstrahles bestimmt, in einer Ebene (Arbeitsebene) liegen, die im Betrieb durch die Trennlinie verläuft, wobei die Achsen der Kühlmitteldüsen (6.1, 6.2) um 180° zueinander versetzt im gleichem Abstand und gleicher Neigung zur Achse des Laserkopfes (1) angeordnet sind **dadurch gekennzeichnet, dass** die Steuereinrichtung (4) so ausgelegt ist, dass ein Kühlmittelstrahl wahlweise über die eine oder andere Kühlmitteldüse (6.1, 6.2) auf das Werkstück (3) gerichtet werden kann, um Trennungen mit unterschiedlichem Richtungssinn auszuführen.

2. Vorrichtung nach Anspruch 1, **dadurch gekennzeichnet,**
**dass** die Mittel zum Ausrichten, Positionieren und relativen Bewegen zwischen dem Laserkopf (1) und dem Werkstück (3) einen in x-y-Richtung angetriebenen x-y-Tisch (5), auf dem das Werkstück (3) fixiert ist, zur Ausführung des translatorischen Anteils der Relativbewegung und ein Mittel zur Drehung der Arbeitsebene, zur Ausführung eines rotatorischen Anteils der Relativbewegung, umfassen, um Trennungen in unterschiedlichen Richtungen auszuführen.

3. Vorrichtung nach Anspruch 1, **dadurch gekennzeichnet,**
**dass** die Mittel zur Drehung der Arbeitsebene eine um den Laserkopf (1) und seine Achse (7) drehbare Halterung ist, an der die Kühlmitteldüsen (6.1, 6.2) befestigt sind.

4. Vorrichtung nach Anspruch 3, **dadurch gekennzeichnet,**
**dass** im Laserkopf (1) vorhandene optische Mittel zur Strahlformung (10) verknüpft mit den Kühlmitteldüsen (6.1, 6.2) um die Achse (7) drehbar gelagert sind.

5. Vorrichtung nach Anspruch 3, **dadurch gekennzeichnet,**
**dass** an der Halterung Rastelemente vorhanden sind, um die Arbeitsebene zwischen definierten Positionen hin und her schwenken zu können.

6. Vorrichtung nach Anspruch 1, **dadurch gekennzeichnet,**
**dass** die Mittel zur Drehung der Arbeitsebene der Laserkopf (1) ist, der um seine Achse (7) drehbar gelagert ist.

7. Vorrichtung nach Anspruch 1, **dadurch gekennzeichnet,**
**dass** die Kühlmitteldüsen (6.1,6.2), die keinen Kühlmittelstrahl auf das Werkstück (3) richten einen Strahl eines Markierungsmittels auf das Werkstück (3) richten.

8. Vorrichtung nach Anspruch 1, **dadurch gekennzeichnet,**
**dass** die Kühlmitteldüsen (6.1,6.2), die keinen Kühlmittelstrahl auf das Werkstück (3) richten einen Gasstrahl auf das Werkstück richten, um dieses im Bereich der Trennlinie von Verunreinigungen freizublasen.

## Claims

1. A device for multiple separation of a flat workpiece of brittle material, along separating lines extending in the same direction, by causing thermomechanical stresses with a laser, said device comprising
• a laser head (1) via which laser radiation (2) is directed onto a workpiece (3),
• means for alignment, positioning and relative movement between the laser head (1) and the workpiece (3) along a separating line,
• means for applying a coolant jet onto the workpiece (3) along the separating line,
• as well as a control unit (4) for controlling the procedure,
wherein the means for applying a coolant jet are two coolant nozzles (6.1, 6.2) whose axes, which determine the direction of the coolant jet, are located in a common plane (working plane) with the axis (7) of the laser head (1), said axis (7) determining the direction of radiation of the laser beam, said common plane extending through the separating line during operation, with the axes of the coolant nozzles (6.1, 6.2) being arranged with an offset of 180° between them, at the same distance from and with the same inclination towards the axis of the laser head (1), **characterized in that** the control unit (4) is designed such that a coolant jet can be selectively directed onto the workpiece (3) by one or the other coolant nozzle (6.1, 6.2) so as to carry out separations with different directions of movement.

2. Device according to claim 1, **characterized in that** the means for alignment, positioning and relative movement between the laser head (1) and the workpiece (3) comprise an x-y table (5), which is driven in the x-y direction and on which the workpiece (3) is fixed, for carrying out the translatory component of the relative movement, and a means for rotating the working plane so as to carry out a rotary component of the relative movement, in order to carry out separations in different directions.

3. Device according to claim 1, **characterized in that** the means for rotating the working plane are formed by a support which is rotatable about the laser head (1) and its axis (7) and to which the coolant nozzles (6.1, 6.2) are fixed.

4. Device according to claim 3, **characterized in that** optical means for beam shaping (10), which are present in the laser head (1), are supported so as to be rotatable about the axis (7) in combination with the coolant nozzles (6.1, 6.2).

5. Device according to claim 3, **characterized in that** snapfit elements are present on the support so as to allow the working plane to be pivoted back and forth between defined positions.

6. Device according to claim 1, **characterized in that** the means for rotating the working plane is the laser head (1) which is supported so as to be rotatable about its axis (7).

7. Device according to claim 1, **characterized in that** those coolant nozzles (6.1, 6.2) which do not direct a coolant jet onto the workpiece (3) do direct a jet of a marker onto the workpiece (3).

8. Device according to claim 1, **characterized in that** those coolant nozzles (6.1, 6.2) which do not direct a coolant jet onto the workpiece (3) do direct a gas jet onto the workpiece so as to blow away any impurities in the vicinity of the separating line.

## Revendications

1. Dispositif pour la séparation en plusieurs parties d'une pièce plane, réalisée en matériau fragile, le long de lignes de séparation de même direction par le développement de tensions thermomécaniques au moyen d'un laser, comportant
- une tête de laser (1), par l'intermédiaire de laquelle un rayon laser (2) est dirigé sur une pièce (3),
- des moyens pour l'orientation, le positionnement et les mouvements relatifs entre la tête de laser (1) et la pièce (3) le long d'une ligne de séparation,
- des moyens destinés à projeter un jet de fluide de refroidissement sur la pièce (3) le long d'une ligne de séparation,
- ainsi qu'un dispositif de commande (4) destiné à commander le déroulement du procédé,
les moyens destinés à projeter un jet de fluide de refroidissement étant deux buses de projection (6.1, 6.2), dont les axes, qui déterminent la direction du jet de fluide de refroidissement, sont situés conjointement avec l'axe (7) de la tête de laser (1), qui détermine la direction de rayonnement du rayon laser, dans un plan (plan de travail) qui, en cours de service, passe par la ligne de séparation, les axes des buses de projection (6.1, 6.2), décalés de 180° l'un par rapport à l'autre, étant disposés à la même distance et avec la même inclinaison par rapport à l'axe de la tête de laser (1), **caractérisé en ce que** le dispositif de commande (4) est conçu de telle sorte qu'un jet de fluide de refroidissement peut être dirigé au choix par l'intermédiaire de l'une ou de l'autre des buses de projection (6.1, 6.2) sur la pièce (3), afin de réaliser des séparations avec une direction différente.

2. Dispositif selon la revendication 1, **caractérisé en ce que** les moyens pour l'orientation, le positionnement et les mouvements relatifs entre la tête de laser (1) et la pièce (3) comportent une table x-y (5), qui est actionnée dans la direction x-y et sur laquelle est fixée la pièce (3) et qui est destiné à réaliser la composante de translation du mouvement relatif, et un moyen destiné à faire tourner le plan de travail en vue de réaliser la composante de rotation du mouvement relatif, afin d'effectuer des séparations dans différentes directions.

3. Dispositif selon la revendication 1, **caractérisé en ce que** le moyen destiné à faire tourner le plan de travail est un support, qui est apte à tourner autour de la tête de laser (1) et de l'axe (7) de celle-ci et sur lequel sont fixées les buses de projection (6.1, 6.2).

4. Dispositif selon la revendication 3, **caractérisé en ce que** des moyens optiques de formation du rayon (10), présents dans la tête de laser (1) et combinés aux buses de projection (6.1, 6.2), sont montés de manière à pouvoir tourner autour de l'axe (7).

5. Dispositif selon la revendication 3, **caractérisé en ce que** sur le support sont prévus des éléments de blocage pour pouvoir faire pivoter le plan de travail en va-et-vient entre des positions définies.

6. Dispositif selon la revendication 1, **caractérisé en ce que** le moyen destiné à faire tourner le plan de travail est la tête de laser (1), qui est montée de manière à pouvoir tourner autour de son axe (7).

7. Dispositif selon la revendication 1, **caractérisé en ce que** les buses de projection (6.1, 6.2), qui ne projettent pas de jet de fluide de refroidissement sur la pièce (3), projettent sur la pièce (3) un jet d'un produit de marquage.

8. Dispositif selon la revendication 1, **caractérisé en ce que** les buses de projection (6.1, 6.2), qui ne projettent pas de jet de fluide de refroidissement sur la pièce (3), projettent un jet de gaz sur la pièce en vue d'éliminer sur celle-ci les saletés présentes dans la zone de la ligne de séparation.
